# EUROPEAN PATENT SPECIFICATION

(11) **EP 3 000 624 B1**
(45) Date of publication and mention of the grant of the patent: **09.05.2018**
(21) Application number: 15175161.7
(22) Date of filing: 02.07.2015
(51) Int. Cl.: B60C 15/00, B60C 15/06, B29D 30/08, B60C 15/05

(54) **PNEUMATIC TIRE**
LUFTREIFEN
PNEUMATIQUE

(30) Priority: 23.09.2014 KR 20140126932
(43) Date of publication of application: 30.03.2016
(73) Proprietor: Hankook Tire Co., Ltd., Seoul 135-723 (KR)
(72) Inventor: Sohn, Gui Jung, 437-120 Gyeonggi-do (KR); Shin, Hun Cheol, 302-757 Daejeon (KR)
(74) Representative: Westphal, Mussgnug & Partner Patentanwälte mbB

(56) References cited:
- EP-A1- 1 705 035
- JP-A- 2000 071 722

## Description

### BACKGROUND

### 1. Technical Field

The present invention relates generally to a pneumatic tire without the turn-ups of a carcass and, more particularly, +to a pneumatic tire in which the arrangement structures and configurations of a carcass and beads are modified, thereby improving the safety and durability of the beads of the pneumatic tire.

### 2. Description of the Related Art

In general, pneumatic tires require their beads to be reinforced in order to endure high loads. The reason for this is that the stress exerted on a pneumatic tire is highest on a the interface between the bead part and the rim of a wheel.

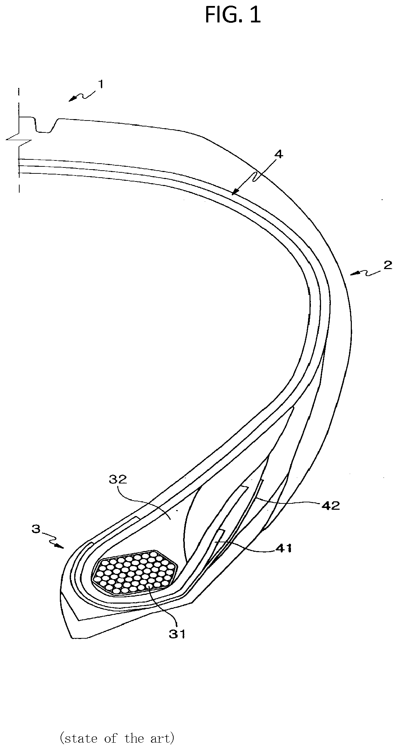

FIG. 1 is a partial sectional view illustrating a bead of a conventional pneumatic tire. As illustrated in FIG. 1, the conventional pneumatic tire includes a tread 1, sidewalls 2, and beads 3. Each of the beads 3 includes a bead core 31, and a bead filler 32 disposed above the bead core 31. A carcass 4 is turned up around the bead core 31, and a steel chafer 41 and a nylon chafer 42 are disposed axially outside the turn-up of the carcass 4. The turn-up edge of the carcass 4 is easily subjected to the risk of the occurrence of a crack because high-rigidity steel material comes into contact with rubber and thus very high stress concentration occurs, and the separation of the bead may be caused by bending and extension movement during the operation of a tire.

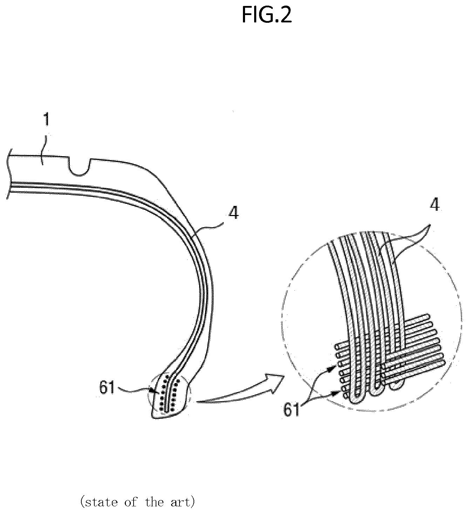

Another type of carcass reinforcement structure has been proposed in which high-strength rubber is applied between beads in each of which bead wires are disposed in two or more rows in their cross sections in the form of a stacked body 61 and an end of a carcass 3 is disposed between the bead wires, as shown in FIG. 2, thereby fastening the carcass 3 without being turned up.

However, this type of tire requires an improvement in durability because its lateral rigidity used to fasten carcass is insufficient.

JP 2000071722 and EP 1 705 035 each disclose a pneumatic tire according to the preamble of claim 1, comprising a tread, sidewalls and a carcass including at least one carcass ply, wherein bead wire cords formed by stacking interranging bead wires in a plurality of layers are formed on one or both sides of the carcass ply and wherein an end of the carcass ply is wrapped around the one or more bead wire cord, wherein the wrapped-around end of the carcass ply is disposed between neighboring bead wire cords or beside the axially outermost bead wire cord.

### SUMMARY

At least one exemplary embodiment of the present invention is directed to the provision of a pneumatic tire in which a bead includes bead wire cords in which bead wires are arranged in the form of a stacked body, in which an end of a carcass is wrapped between bead wire cords, and thus the end of the carcass can be securely supported and held and the rigidity of the bead can be enhanced, thereby improving the safety and durability of the bead.

At least some exemplary embodiments of the present invention are directed to the provision of a pneumatic tire including an improved bead in which a carcass can maintain an optimum shape and in which the forces of the bead to hold the carcass and the compressions against the rim of a wheel can increase, and a method of fabricating the pneumatic tire.

In accordance with an aspect of the present invention, there is provided a pneumatic tire, including a tread, sidewalls, and a carcass including at least one carcass ply; wherein one or more bead wire cords formed by stacking and arranging bead wires in a plurality of layers are formed on one or both sides of the carcass ply, one or more bead filler films are placed between the bead wire cords, an end of the carcass ply is wrapped around the one or more bead wire cords,and the wrap-around end of the carcass ply is disposed between neighboring bead wire cords or beside the axially outermost bead wire cord.

The carcass ply may be wrapped around the bead wire cord from an axially inner side of the tire toward an axially outer side of the tire or from the axially outer side of the tire toward the axially inner side of the tire. The carcass may include two or more carcass plies, and the bead wire cord may include two or more rows of bead wire cords. When the carcass comprises two or more carcass plies, each end of the two or more carcass plies may be wrapped around different respective bead wire cords.

In accordance with an aspect of the present invention, there is provided a method of fabricating a pneumatic tire, including sequentially stacking inner liner rubber, bonding rubber, and a first second bead filler film in a torus structure; disposing or knitting a carcass ply on top of the first second bead filler film so that the carcass ply has a portion wrapped around a first bead wire cord; disposing a first bead filler film on the carcass ply, and winding the first bead wire cord three or more times; disposing a second first bead filler film on an axially outer side of the wound first bead wire cord, and wrapping the carcass ply around the first bead wire cord so that a wrap-around end of the carcass ply is placed between neighboring bead wire cords or beside the axially outermost bead wire cord; and disposing a third first bead filler film on the wrapped-up carcass ply, winding a second bead wire cord three or more times, and then disposing a second second bead filler film.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a schematic sectional view illustrating a conventional pneumatic tire;
FIG. 2 is a schematic sectional view illustrating a conventional pneumatic tire in which a carcass has not been turned up;
FIG. 3 is a schematic sectional view illustrating a bead of a pneumatic tire according to an exemplary embodiment of the present invention;
FIG. 4 is a schematic diagram illustrating a method of fabricating a bead of a pneumatic tire according to an exemplary embodiment of the present invention;
FIG. 5 is a schematic sectional view illustrating a bead of a pneumatic tire according to another exemplary embodiment of the present invention;
FIG. 6 is a schematic diagram illustrating a method of fabricating a bead of a pneumatic tire according to another exemplary embodiment of the present invention;
FIG. 7 is a schematic sectional view illustrating a bead of a pneumatic tire according to still another exemplary embodiment of the present invention;
FIG. 8 is a schematic diagram illustrating a method of fabricating a bead of a pneumatic tire according to still another exemplary embodiment of the present invention;
FIG. 9 is a schematic sectional view illustrating a bead of a pneumatic tire according to yet still another exemplary embodiment of the present invention; and
FIG. 10 is a schematic diagram illustrating a method of fabricating a bead of a pneumatic tire according to yet still another exemplary embodiment of the present invention.

### DETAILED DESCRIPTION

Exemplary embodiments of the present invention are described in detail below with reference to the accompanying exemplary drawings.

The term "cord" used herein refers to a single filament, or an assembly, such as a multiple filament, twisted cables or an equivalent assembly.

The term "bead" used herein refers to a tire component that functions to enable a tire to be mounted around the rim of a wheel.

The term "bead wire cord" used herein refers to an array of cords in which bead wires formed by topping metal wires with rubber are arranged in the form of a stacked body and which are arranged along the circumferential direction of a tire. Although these cords are appropriately made of metal, some or all of them may be made of fabric or other materials.

The term "bead filler film" used herein refers to bead filler rubber formed in a sheet. The thickness of the bead filler film may range from 1.5 to 2.0 mm.

The term "circumferential direction" used herein refers to a direction extending along the periphery of the annular tread surface perpendicular to an axial direction.

The terms "axial" and "axially" used here are used to refer to lines or directions that are parallel to the axis of rotation of the tire.

The term "inner" used herein refers to "toward the inside of the tire."

The term "outer" used herein refers to "toward the tire's exterior."

In the description of this invention, the terms "carcass" and "carcass ply" may be used interchangeably, in case of a mono-ply carcass.

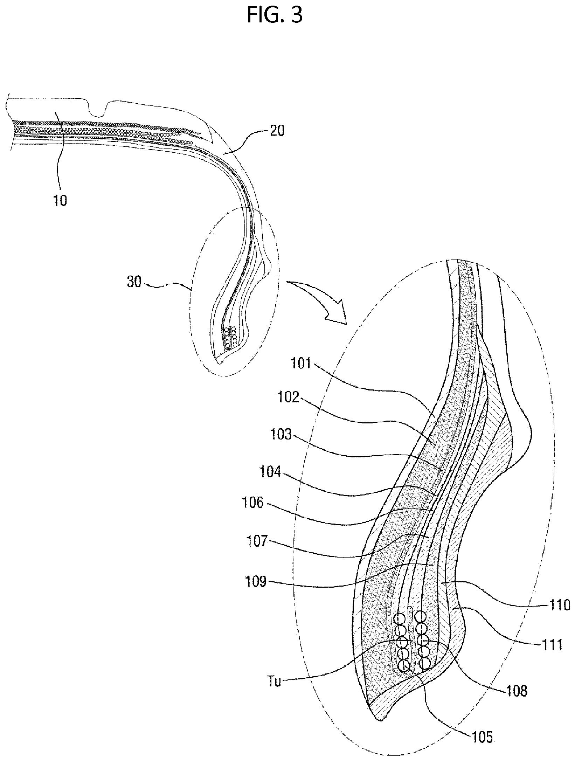

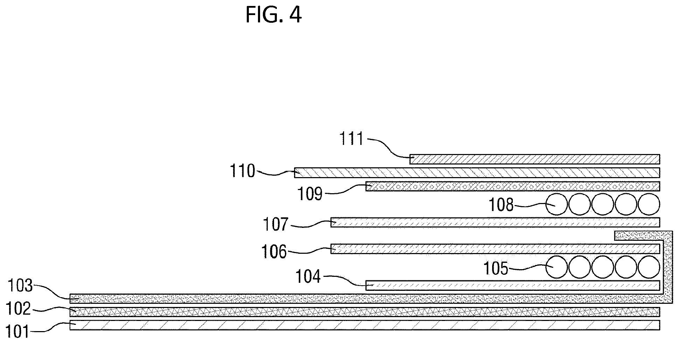

FIG. 3 is a schematic sectional view illustrating a bead of a pneumatic tire according to an exemplary embodiment of the present invention, and FIG. 4 is a schematic diagram illustrating a method of fabricating a bead of a pneumatic tire according to an exemplary embodiment of the present invention of FIG. 3.

Referring to FIG. 3, the pneumatic tire according to the present exemplary embodiment includes a tread 10, sidewalls 20, and a carcass 103 including at least one carcass ply. One or more bead wire cords 105 and 108 formed by stacking bead wires in a plurality of layers are formed on one or both sides of the carcass ply. One or more bead filler films 106 and 107 are placed between the bead wire cords.

The carcass may be composed of at least one carcass ply extending from a tread part through sidewall parts to a bead part. An end of the carcass ply 103 is wrapped around the one or more bead wire cords 105. The wrap-around end Tu of the carcass ply is configured to be disposed between neighboring bead wire cords 105 and 108 or beside the axially outermost bead wire cord. That is, the tire according to the present exemplary embodiment is configured such that the end of the carcass 103 is wrapped around the bead wire cord 105 and thus the wrap-around end Tu is placed and fastened between the neighboring bead wire cords 105 and 108. Accordingly, when air is injected into the tire, a bead and a rim are brought into tight contact by compressive force, and thus the wrap-around end Tu of the carcass 103 is fastened again by the compressive force.

In the present exemplary embodiment, the carcass ply that constitutes part of the carcass 103 is not limited to a mono ply, and may include two or more carcass plies. Each of the bead wire cords 105 and 108 may also include two or more rows of bead wire cords.

In the tire according to the present exemplary embodiment, the wrap-around end Tu may be wrapped around the bead wire cord 105, and the upper edge of the wrap-around end Tu may be formed to be even with or slight above the upper edge of the bead wire cord 105. The length of the wrap-around end Tu of the carcass ply 103 may be equal to or longer than 10 mm.

The end of the carcass ply 103 may be wrapped around the bead wire cord 105 from the axially inner side of the tire toward the axially outer side of the tire or from the axially outer side of the tire toward the axially inner side of the tire.

When the carcass includes two or more carcass plies, each end of the two or more carcass plies may be wrapped around different respective bead wire cords. In this case, the wrap-around directions of each carcass ply may be the same or different in the axial direction of the tire.

When each end of the two or more carcass plies are wrapped around different respective bead wire cords in different axial directions, an end of one carcass ply may be wrapped around one bead wire cord from the axially inner side of the tire toward the axially outer side of the tire, and an end of the other carcass ply may be wrapped around the other bead wire cord from the axially outer side of the tire toward the axially inner side of the tire.

First bead filler films 106 and 107 are disposed between the bead wire cords 105 and 108, and first bead filler films 104 and 106 are disposed on both sides of the axially inner bead wire cord 105. A second bead filler film 109 is disposed on the axially outer side of the axially outer bead wire cord 108.

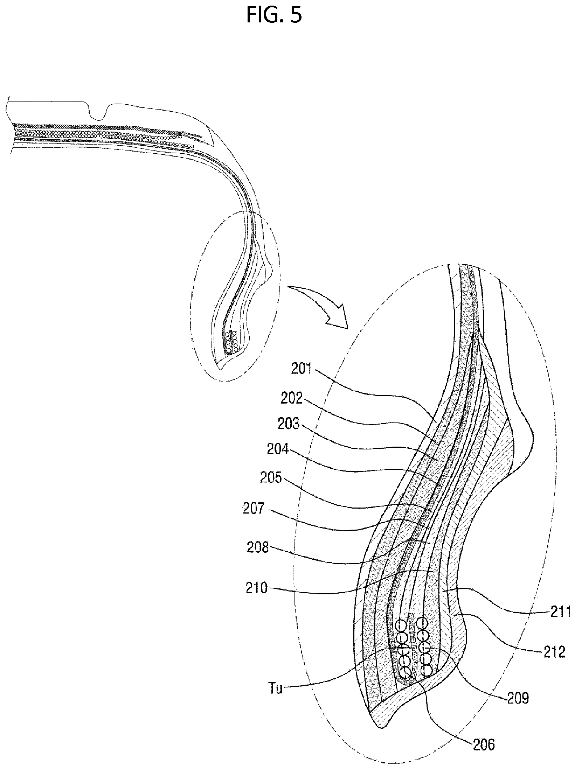

FIG. 5 illustrates a tire, including a single carcass ply 204 and two rows of bead wire cords 206 and 209, according to another exemplary embodiment of the present invention.

Referring to FIG. 5, the carcass 204 is wrapped around the first bead wire cord 206 from the axially inner side of the tire toward the axially outer side of the tire, and the second bead wire cord 209 are wound on the axially outer side of the wrap-around end Tu wrapped around the first bead wire cord 206, thereby forming a structure that supports and holds the carcass 204.

Meanwhile, referring to FIG. 5 again, first bead filler films 205, 207 and 208 are disposed between the bead wire cords 206 and 209 and on both sides of the first bead wire cord 206, and a second bead filler film 203 is disposed on the axially inner side of the carcass ply 204 and another second bead filler film 210 is disposed on the axially outer side of the axially outermost bead wire cord 209.

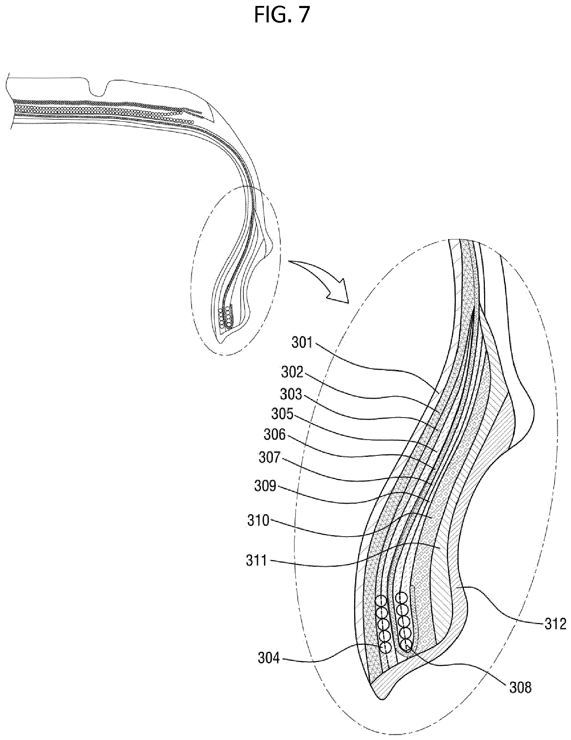

Referring to FIG. 7, a tire according to still another exemplary embodiment of the present invention includes a single carcass ply 306 and two rows of bead wire cords 304 and 308. In this tire, a carcass 306 is inserted between the first bead wire cord 304 and the second bead wire cord 308 and wrapped around the axially outer bead wire cord 308, and the wrap-around end of the carcass 305 is disposed beside the axially outer bead wire cord 308. First bead filler films 305 and 307 are disposed on both sides of the carcass 306 between the bead wire cords 304 and 308, and first bead filler films 307 and 309 are disposed on both sides of the axially outer bead wire cord 308. A second bead filler film 303 is disposed on the axially inner side of the axially inner bead wire cord 304, and another second bead filler film 310 is disposed on the axially outer side of the wrap-around end of the carcass 306.

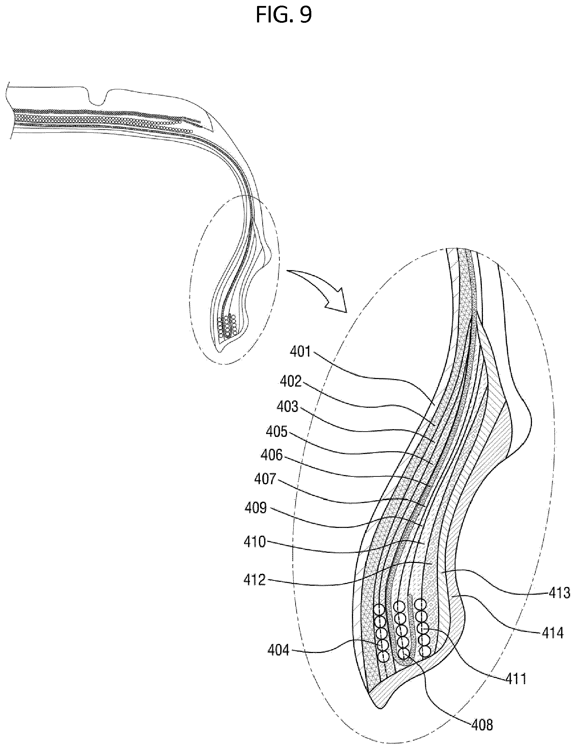

Referring to FIG. 9, a tire according to yet another exemplary embodiment of the present invention includes a single carcass ply 406, and three rows of bead wire cords 404, 408 and 411. In this tire, a carcass 406 is wrapped around the axially center bead wire cord 408 of the three rows of bead wire cords, and a wrap-around end of the carcass 406 is disposed between the axially center bead wire cord 408 and the axially outer bead wire cord 411. First bead filler films 407 and 409 are disposed on both sides of the axially center bead wire cord 408, and another first bead filter film 410 is disposed on the axially inner side of the axially outer bead wire cord 411. Second bead filler films 403 and 405 are disposed on the axially inner and outer sides of the axially inner bead wire cord 404, and another second bead filter film 412 is disposed on the axially outer side of the axially outer bead wire cord 411.

The first bead filler films 104, 106, 107, 205, 207, 208, 305, 307, 309, 407, 409 and 410 may have a Shore A hardness value equal to or greater than 80, a 10% modulus value equal to or greater than 60 Mpa, and a 50% modulus value equal to or greater than 90 Mpa. The second bead filler films 109, 203, 210, 303, 310, 403, 405 and 412 may have a Shore A hardness value equal to or less than 80, a 10% modulus value equal to or less than 60 Mpa, and a 50% modulus value equal to or less than 90 Mpa.

The pneumatic tire according to an exemplary embodiment of the present invention may further include a rubber reinforced layer 110, 211, 311 or 413, including a rubber stiffener, on the axially outer side of a second bead filler film adjacent to the axially outermost bead wire cord.

Each of the first and second bead filler films may have a triangular cross section profile that the width decreases from a bead base toward the edge of the corresponding bead filler film.

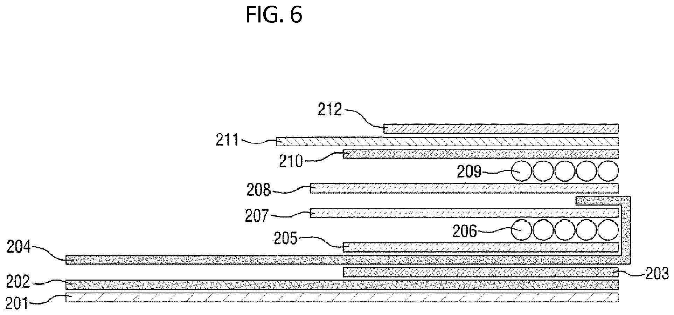

Another aspect of the present invention is directed to a method of fabricating a pneumatic tire and, more particularly, to a method of fabricating a bead. A method of fabricating a pneumatic tire according to an exemplary embodiment of the present invention is described with reference to FIG. 6.

When a tire is fabricated by the method of the present exemplary embodiment, inner liner rubber 201 and bonding rubber 202 are sequentially stacked in a torus structure, a first second bead filler film 203 is stacked, and the ply of a carcass 204 is disposed or knitted such that the ply of the carcass 204 can have a constant each per inch (EPI) along the circumferential direction and the length of an end wrapped around a first bead wire cord 206 can be equal to or longer than 10 mm. Thereafter, a first bead filler film 205 is disposed on top of the carcass 204, a first bead wire cord 206 is wound three or more times, a second first bead filler film 207 is disposed on the axially outer side of the wound first bead wire cord 206, and then the carcass 204 is wrapped around the first bead wire cord 206. In this case, the carcass 204 is wrapped such that a wrap-around end of the carcass ply is placed between the neighboring bead wire cords 206 and 209. A third first bead filler film 208 is disposed on the wrapped-up carcass 204, second bead wire cord 209 are wound three or more times, and a second second bead filler film 210 is disposed on top of the second bead wire cord 209, thereby forming a bead. When necessary, a rubber reinforced layer 211 including a rubber stiffener may be additionally disposed on top of the second bead filler film 210.

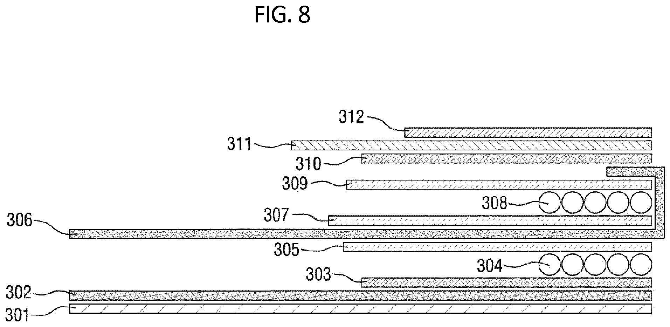

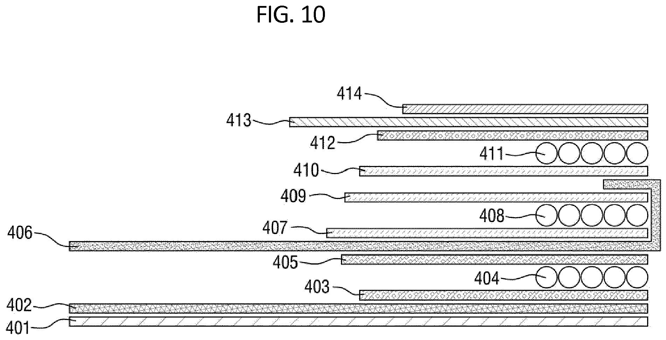

FIGS. 4, 8 and 10 illustrate methods of consecutively forming the bead core of a tire according to the other exemplary embodiments of the present invention in the form of schematic diagrams. Although these methods are different from one another in that the configurations of the layers of corresponding tires differ, they are the same as one another in that a process of wrapping the carcass 103, 306 or 406 around one of the bead wire cords with bead filler films disposed on both sides thereof and then disposing another type of bead filler film is performed in the same manner. Three or more first bead filler films 205, 207 and 208, 305, 307 and 309, or 407, 409 and 410 may be included, and also two or more second bead filler films 203 and 210, 303 and 310, or 403, 405 and 412 may be included.

The tires according to various exemplary embodiments of the present invention can mitigate damages attributable to the deformation of a carcass and rubber compared to conventional carcass turn-up type tires, and thus considerably contribute to the prevention of a bead separation problem among bead problems occurring in connection with a bead, thereby improving the safety and durability of the tires.

The tires according to various exemplary embodiments of the present invention are configured such that an end of a carcass is wrapped between bead wire cords in which bead wires are arranged in a plurality of layers in the form of a stacked body, and thus the end of the carcass can be securely supported and held, thereby improving the stability and durability of the bead.

Although the present invention has been described in detail in conjunction with the specific exemplary embodiments of the present invention, this description is intended merely for illustration. Various modifications and variations may be made to the present invention without departing from the scope of the invention. Accordingly, the scope of the present invention is not limited to the exemplary embodiments, but should be defined based on only the attached claims.

## Claims

1. A pneumatic tire, comprising a tread (10), sidewalls (20), and a carcass (103, 204, 306, 406) including at least one carcass ply; wherein
either one or more bead wire cords (304, 308, 404, 408, 411) formed by stacking and arranging bead wires in a plurality of layers are formed on both sides of the carcass ply
or more than one bead wire cord (105, 108, 206, 209) formed by stacking and arranging bead wires in a plurality of layers is formed on one or both sides of the carcass ply,
wherein an end of the carcass ply is wrapped around the one or more bead wire cords (105, 108, 206, 209, 304, 308, 404, 408, 411), and the wrap-around end of the carcass ply is disposed between neighboring bead wire cords (105, 108, 206, 209, 304, 308, 404, 408, 411) or beside the axially outermost bead wire cord,
wherein the term "bead wire cord" refers to an array of cords in which bead wires formed by topping metal wires with rubber are arranged in the form of a stacked body and which are arranged along the circumferential direction of a tire, wherein the term "cord" refers to a single filament, or an assembly, such as a multiple filament, twisted cables or an equivalent assembly,
**characterized in that**
one or more bead filler films (106, 107, 205, 207, 208, 303, 305, 307, 310, 403, 405, 407, 409, 410, 412) are placed between the bead wire cords, wherein the term "bead filler film" refers to bead filler rubber formed in a sheet.

2. The pneumatic tire of claim 1, wherein the carcass ply is wrapped around the bead wire cord (105, 108, 206, 209, 304, 308, 404, 408, 411) from an axially inner side of the tire toward an axially outer side of the tire or from the axially outer side of the tire toward the axially inner side of the tire.

3. The pneumatic tire of claim 1, wherein the carcass (103, 264, 306, 408) comprises two or more carcass plies, and the bead wire cord comprises two or more rows of bead wire cords (105, 108, 206, 209, 304, 308, 404, 408, 411).

4. The pneumatic tire of claim 3, wherein each end of the two or more carcass plies are wrapped around different respective bead wire cords (105, 108, 206, 209, 304, 308, 404, 408, 411).

5. The pneumatic tire of claim 4, wherein each end of the two or more carcass plies are wrapped around the different respective bead wire cords (105, 108, 206, 209, 304, 308, 404, 408, 411) in different axial directions.

6. The pneumatic tire of claim 5, wherein an end of one carcass ply is wrapped around one bead wire cord (105, 108, 206, 209, 304, 308, 404, 408, 411) from an axially inner side of the tire toward an axially outer side of the tire, and an end of another carcass ply is wrapped around another bead wire cord (105, 108, 206, 209, 304, 308, 404, 408, 411) from the axially outer side of the tire toward the axially inner side of the tire.

7. The pneumatic tire of claim 3, wherein one or more first bead filler films (407, 409, 410, 412) are disposed between the bead wire cords and both sides of the bead wire cord (105, 108, 206, 209, 304, 308, 404, 408, 411) around which the carcass ply is wrapped, and one or more second bead filler films (403, 405) are disposed on an axially inner side of the carcass ply or an axially outer side of the axially outermost bead wire cord (105, 108, 206, 209, 304, 308, 404, 408, 411).

8. The pneumatic tire of claim 7, wherein the first bead filler films (407, 409, 410, 412) have a Shore A hardness value equal to or greater than 80, a 10% modulus value equal to or greater than 60 Mpa, and a 50% modulus value equal to or greater than 90 Mpa.

9. The pneumatic tire of claim 7, wherein the second bead filler films (403, 405) have a Shore A hardness value equal to or less than 80, a 10% modulus value equal to or less than 60 Mpa, and a 50% modulus value equal to or less than 90 Mpa.

10. The pneumatic tire of claim 7, further comprising a rubber reinforced layer, including a rubber stiffener, on an axially outer side of the second bead filler (403, 405) film adjacent to the axially outermost bead wire cord (105, 108, 206, 209, 304, 308, 404, 408, 411).

11. The pneumatic tire of claim 1, wherein a length of a wrap-around end of the carcass ply is equal to or longer than 10 mm.

12. The pneumatic tire of claim 1, wherein each of the bead filler films (106, 107, 205, 207, 208, 303, 305, 307, 310, 403, 405, 407, 409, 410, 412) has a triangular cross section profile that decreases from a bead base toward an edge of the corresponding bead filler film.

13. A method of fabricating a pneumatic tire, comprising:
sequentially stacking inner liner rubber, bonding rubber, and a first second bead filler film in a torus structure;
disposing or knitting a carcass ply on top of the first second bead filler film (106, 107, 205, 207, 208, 303, 305, 307, 310, 403, 405, 407, 409, 410, 412) so that the carcass ply has a portion wrapped around a first bead wire cord (105, 108, 206, 209, 304, 308, 404, 408, 411);
disposing a first bead filler film (106, 107, 205, 207, 208, 303, 305, 307, 310, 403, 405, 407, 409, 410, 412) on the carcass ply, and winding the first bead wire cord (105, 108, 206, 209, 304, 308, 404, 408, 411) three or more times;
disposing a second first bead filler (106, 107, 205, 207, 208, 303, 305, 307, 310, 403, 405, 407, 409, 410, 412) film on an axially outer side of the wound first bead wire cord (105, 108, 206, 209, 304, 308, 404, 408, 411), and wrapping the carcass ply around the first bead wire cord (105, 108, 206, 209, 304, 308, 404, 408, 411) so that a wrap-around end of the carcass ply is placed between neighboring bead wire cords (105, 108, 206, 209, 304, 308, 404, 408, 411) or beside the axially outermost bead wire cord; and
disposing a third first bead filler film (106, 107, 205, 207, 208, 303, 305, 307, 310, 403, 405, 407, 409, 410, 412) on the wrapped-up carcass ply, winding a second bead wire cord (105, 108, 206, 209, 304, 308, 404, 408, 411) three or more times, and then disposing a second second bead filler film (106, 107, 205, 207, 208, 303, 305, 307, 310, 403, 405, 407, 409, 410, 412), wherein the term "bead wire cord" refers to an array of cords in which bead wires formed by topping metal wires with rubber are arranged in the form of a stacked body and which are arranged along the circumferential direction of a tire wherein, wherein the term "cord" refers to a single filament, or an assembly, such as a multiple filament, twisted cables or an equivalent assembly and wherein the term "bead filler film" refers to bead filler rubber formed in a sheet.

14. The method of claim 13, wherein the first bead filler films (106, 107, 205, 207, 208, 303, 305, 307, 310, 403, 405, 407, 409, 410, 412) comprise three or more first bead filler films (106, 107, 205, 207, 208, 303, 305, 307, 310, 403, 405, 407, 409, 410, 412).

15. The method of claim 13, wherein the second bead filler films (106, 107, 205, 207, 208, 303, 305, 307, 310, 403, 405, 407, 409, 410, 412) comprise two or more second bead filler films (106, 107, 205, 207, 208, 303, 305, 307, 310, 403, 405, 407, 409, 410, 412).

## Patentansprüche

1. Luftreifen, umfassend eine Lauffläche (10), Seitenwände (20), und eine Karkasse (103, 204, 306, 406), die mindestens eine Karkassenlage aufweist; wobei
entweder ein oder mehrere Wulstkernkorde (304, 308, 404, 408, 411), die durch das Aufschichten und Anordnen von Wulstkernen in einer Mehrheit von Schichten gebildet sind, an beiden Seiten der Karkassenlage gebildet sind
oder mehr als einer Wulstkernkord (105, 108, 206, 209), der durch das Aufschichten und Anordnen von Wulstkernen in einer Mehrheit von Schichten gebildet ist, an einer Seite oder an beiden Seiten der Karkassenlage gebildet ist,
wobei ein Ende der Karkassenlage um den einen oder die mehreren Wulstkernkorde (105, 108, 206, 209, 304, 308, 404, 408, 411) umgewickelt ist, und das umwickelnde Ende der Karkassenlage zwischen benachbarten Wulstkernkorden (105, 108, 206, 209, 304, 308, 404, 408, 411) oder neben dem axial äußersten Wulstkernkord angeordnet ist,
wobei sich der Begriff "Wulstkernkord" auf eine Reihe von Korden bezieht, in denen Wulstkerne, die durch Überziehen von Metalldrahten mit Gummi gebildet sind, in Form eines aufgeschichteten Körpers angeordnet sind und die entlang der Umfangsrichtung eines Luftreifens angeordnet sind, wobei sich der Begriff "Kord" auf einen einzelnen Faden, oder auf eine Anordnung, wie ein Mehrfaden, verdrillte Kabel oder eine äquivalente Anordnung bezieht,
**dadurch gekennzeichnet, dass**
ein oder mehrere Kernreiterfilme (106, 107, 205, 207, 208, 303, 305, 307, 310, 403, 405, 407, 409, 410, 412) zwischen den Wulstkernkorden angeordnet sind, wobei sich der Begriff "Kernreiterfilm" auf Kernreitergummi, der in einem Blatt gebildet ist, bezieht.

2. Luftreifen nach Anspruch 1, wobei die Karkassenlage um den Wulstkernkord (105, 108, 206, 209, 304, 308, 404, 408, 411) von einer axial inneren Seite des Reifens in Richtung einer axial äußeren Seite des Reifens oder von der axial äußeren Seite des Reifens in Richtung der axial inneren Seite des Reifens umgewickelt ist.

3. Luftreifen nach Anspruch 1, wobei die Karkasse (103, 264, 306, 408) mindestens zwei Karkassenlagen aufweist, und der Wulstkernkord mindestens zwei Reihen von Wulstkernkorden (105, 108, 206, 209, 304, 308, 404, 408, 411) aufweist.

4. Luftreifen nach Anspruch 3, wobei jedes Ende der mindestens zwei Karkassenlagen um verschiedene, jeweilige Wulstkernkorde (105, 108, 206, 209, 304, 308, 404, 408, 411) umgewickelt ist.

5. Luftreifen nach Anspruch 4, wobei jedes Ende der mindestens zwei Karkassenlagen um die verschiedenen, jeweiligen Wulstkernkorde (105, 108, 206, 209, 304, 308, 404, 408, 411) in verschiedenen Axialrichtungen umgewickelt ist.

6. Luftreifen nach Anspruch 5, wobei ein Ende einer einen Karkassenlage um einen Wulstkernkord (105, 108, 206, 209, 304, 308, 404, 408, 411) von einer axial inneren Seite des Reifens in Richtung einer axial äußeren Seite des Reifens umgewickelt ist, und ein Ende einer anderen Karkassenlage um einen anderen Wulstkernkord (105, 108, 206, 209, 304, 308, 404, 408, 411) von der axial äußeren Seite des Reifens in Richtung der axial inneren Seite des Reifens umgewickelt ist.

7. Luftreifen nach Anspruch 3, wobei einer oder mehrere ersten Kernreiterfilme (407, 409, 410, 412) zwischen den Wulstkernkorden und beiden Seiten des Wulstkernkords (105, 108, 206, 209, 304, 308, 404, 408, 411), um den die Karkassenlage umgewickelt ist, angeordnet sind, und einer oder mehrere zweiten Kernreiterfilme (403, 405) an einer axial inneren Seite der Karkassenlage oder einer axial äußeren Seite des axial äußersten Wulstkernkords (105, 108, 206, 209, 304, 308, 404, 408, 411) angeordnet sind.

8. Luftreifen nach Anspruch 7, wobei die ersten Kernreiterfilme (407, 409, 410, 412) einen Shore A Härtewert, der gleich oder größer als 80 ist, einen 10% Modulwert, der gleich oder größer als 60 Mpa ist, und einen 50% Modulwert, der gleich oder größer als 90 Mpa ist, aufweisen.

9. Luftreifen nach Anspruch 7, wobei die zweiten Kernreiterfilme (403, 405) einen Shore A Härtewert, der gleich oder größer als 80 ist, einen 10% Modulwert, der gleich oder größer als 60 Mpa ist, und einen 50% Modulwert, der gleich oder größer als 90 Mpa ist, aufweisen.

10. Luftreifen nach Anspruch 7, weiter umfassend eine Gummiverstärkte Schicht, die eine Gummiversteifung umfasst, an einer axial äußeren Seite des zweiten Kernreiterfilms (403, 405), der an den axial äußersten Wulstkernkord (105, 108, 206, 209, 304, 308, 404, 408, 411) angrenzend ist.

11. Luftreifen nach Anspruch 1, wobei eine Länge des umwickelnden Endes der Karkassenlage gleich oder länger als 10 mm ist.

12. Luftreifen nach Anspruch 1, wobei jeder der Kernreiterfilme (106, 107, 205, 207, 208, 303, 305, 307, 310, 403, 405, 407, 409, 410, 412) ein dreieckiges Querschnittprofil aufweist, das von einer Wulstsohle zu einer Kante des entsprechenden Kernreiterfilms abnimmt.

13. Verfahren zur Herstellung eines Luftreifens, umfassend:
sequentielles Aufschichten von Innenliner-Gummi, Bindungsgummi, und einem ersten, zweiten Kernreiterfilm in einer Torus-Struktur;
Anordnen oder Stricken einer Karkassenlage über dem ersten, zweiten Kernreiterfilm (106, 107, 205, 207, 208, 303, 305, 307, 310, 403, 405, 407, 409, 410, 412), so dass die Karkassenlage einen Abschnitt aufweist, der um einen ersten Wulstkernkord (105, 108, 206, 209, 304, 308, 404, 408, 411) umgewickelt ist;
Anordnen eines ersten Kernreiterfilms (106, 107, 205, 207, 208, 303, 305, 307, 310, 403, 405, 407, 409, 410, 412) an einer Karkassenlage, und Winden des ersten Wulstkernkords (105, 108, 206, 209, 304, 308, 404, 408, 411) mindestens dreimal;
Anordnen eines zweiten, ersten Kernreiterfilms (106, 107, 205, 207, 208, 303, 305, 307, 310, 403, 405, 407, 409, 410, 412) an einer axial äußeren Seite des gewundenen, ersten Wulstkernkords (105, 108, 206, 209, 304, 308, 404, 408, 411), und Umwickeln der Karkassenlage um den ersten Wulstkernkord (105, 108, 206, 209, 304, 308, 404, 408, 411), so dass ein umwickelndes Ende der Karkassenlage zwischen benachbarten Wulstkernkorden (105, 108, 206, 209, 304, 308, 404, 408, 411) oder neben dem axial äußersten Wulstkernkord angeordnet ist; und
Anordnen eines dritten, ersten Kernreiterfilms (106, 107, 205, 207, 208, 303, 305, 307, 310, 403, 405, 407, 409, 410, 412) an der umgewickelten Karkassenlage, Winden eines zweiten Wulstkernkords (105, 108, 206, 209, 304, 308, 404, 408, 411) mindestens dreimal, und dann Anordnen eines zweiten, zweiten Kernreiterfilms (106, 107, 205, 207, 208, 303, 305, 307, 310, 403, 405, 407, 409, 410, 412), wobei sich der Begriff "Wulstkernkord" auf eine Reihe von Korden bezieht, in denen Wulstkerne, die durch Überziehen von Metalldrahten mit Gummi gebildet sind, in Form eines aufgeschichteten Körpers angeordnet sind und die entlang der Umfangsrichtung eines Luftreifens angeordnet sind, wobei sich der Begriff "Kord" auf einen einzelnen Faden, oder auf eine Anordnung, wie ein Mehrfaden, verdrillte Kabel oder eine äquivalente Anordnung bezieht, und wobei sich der Begriff "Kernreiterfilm" auf Kernreitergummi, der in einem Blatt gebildet ist, bezieht.

14. Verfahren nach Anspruch 13, wobei die ersten Kernreiterfilme (106, 107, 205, 207, 208, 303, 305, 307, 310, 403, 405, 407, 409, 410, 412) mindestens drei erste Kernreiterfilme (106, 107, 205, 207, 208, 303, 305, 307, 310, 403, 405, 407, 409, 410, 412) umfassen.

15. Verfahren nach Anspruch 13, wobei die zweiten Kernreiterfilme (106, 107, 205, 207, 208, 303, 305, 307, 310, 403, 405, 407, 409, 410, 412) mindestens zwei zweite Kernreiterfilme (106, 107, 205, 207, 208, 303, 305, 307, 310, 403, 405, 407, 409, 410, 412) umfassen.

## Revendications

1. Pneumatique de véhicule comprenant une bande de roulement (10), des flancs (20) et une carcasse (103, 204, 306, 406) comportant au moins une nappe de carcasse, dans lequel
au moins un cordon de fil de talon (304, 308, 404, 408, 411) formé en empilant et en installant des fils de talon selon un ensemble de couches est formé de part et d'autre de la nappe de carcasse, ou
plus d'un cordon de fil de talon (105, 108, 206, 209) formé en empilant et en installant des fils de talon selon un ensemble de couches sont formés sur l'un ou sur les deux côtés de la nappe de carcasse,
pneumatique de véhicule dans lequel une extrémité de la nappe de carcasse est enroulée autour du cordon de fil de talon (105, 108, 206, 209, 304, 308, 404, 408, 411), et l'extrémité enroulée de la nappe de carcasse est disposée entre des cordons de fil de talon voisins (105, 108, 206, 209, 304, 308, 404, 408, 411) ou à côté du cordon de fil de talon axialement le plus externe,
le terme "cordon de fil de talon" se référant à un agencement de cordons dans lequel des fils de talon formés par revêtement de fils métalliques avec du caoutchouc sont disposés sous la forme d'un corps empilé et qui sont installés le long de la direction périphérique d'un pneumatique, le terme "cordon" se référant à un filament unique ou à un ensemble tel qu'un filament multiple, des câbles déformés par torsion ou un ensemble équivalent,
**caractérisé en ce qu'**
au moins un film de remplissage de talon (106, 107, 205, 207, 208, 303, 305, 307, 310, 403, 405, 407, 409, 410, 412) est positionné entre les cordons de fil de talon, le terme "film de remplissage de talon" se référant à du caoutchouc de remplissage de talon mis en forme selon une feuille.

2. Pneumatique de véhicule conforme à la revendication 1,
dans lequel la nappe de carcasse est enroulée autour du cordon de fil de talon (105, 108, 206, 209, 304, 308, 404, 408, 411) à partir du côté axialement interne du pneumatique vers le côté axialement externe de celui-ci ou à partir du côté axialement externe du pneumatique vers le côté axialement interne de celui-ci.

3. Pneumatique de véhicule conforme à la revendication 1,
dans lequel la carcasse (103, 264, 306, 408) comprend au moins deux nappes de carcasse et le cordon de fil de talon comprend au moins deux rangées de cordons de fils de talon (105, 108, 206, 209, 304, 308, 404, 408, 411).

4. Pneumatique de véhicule conforme à la revendication 1,
dans lequel chacune des extrémités des nappes de carcasse est enroulée autour de cordons de fil de talon différents respectifs (105, 108, 206, 209, 304, 308, 404, 408, 411).

5. Pneumatique de véhicule conforme à la revendication 4,
dans lequel chacune des extrémités des nappes de carcasse est enroulée autour des différents cordons de fil de talon respectifs (105, 108, 206, 209, 304, 308, 404, 408, 411) dans différentes directions axiales.

6. Pneumatique de véhicule conforme à la revendication 5,
dans lequel une extrémité d'une nappe de carcasse est enroulée autour d'un cordon de fil de talon (105, 108, 206, 209, 304, 308, 404, 408, 411) à partir du côté axialement interne du pneumatique vers le côté axialement externe de celui-ci et une extrémité d'une autre nappe de carcasse est enroulée autour d'un autre cordon de fil de talon (105, 108, 206, 209, 304, 308, 404, 408, 411) à partir du côté axialement externe du pneumatique vers le côté axialement interne de celui-ci.

7. Pneumatique de véhicule conforme à la revendication 3,
dans lequel au moins un premier film de remplissage de talon (407, 409, 410, 412) est positionné entre les cordons de fil de talon et les deux côtés du cordon de fil de talon (105, 108, 206, 209, 304, 308, 404, 408, 411) autour duquel la nappe de carcasse est enroulée et au moins un second film de remplissage de talon (403, 405) est positionné sur le côté axialement interne de la nappe de carcasse ou sur le côté axialement externe du cordon de fil de talon axialement le plus externe (105, 108, 206, 209, 304, 308, 404, 408, 411).

8. Pneumatique de véhicule conforme à la revendication 7,
dans lequel le premier film de remplissage de talon (407, 409, 410, 412) a une dureté Shore A égale ou supérieure à 80, un module d'étirement à 10% égal ou supérieur à 60 Mpa, et un module d'étirement à 50% égal ou supérieur à 90 Mpa.

9. Pneumatique de véhicule conforme à la revendication 7,
dans lequel le second film de remplissage de talon (403, 405) a une dureté Shore A égale ou inférieure à 80, un module d'étirement à 10% égal ou inférieur à 60 Mpa et un module d'étirement à 50% égal ou inférieur à 90Mpa.

10. Pneumatique de véhicule conforme à la revendication 7,
comprenant en outre une couche de renfort en caoutchouc renfermant du caoutchouc raidisseur sur le côté axialement extérieur du second film de remplissage de talon (403, 405) adjacent au cordon de fil de talon axialement le plus externe (105, 108, 206, 209, 304, 308, 404, 408, 411).

11. Pneumatique de véhicule conforme à la revendication 1,
dans lequel la longueur de l'extrémité enroulée de la nappe de carcasse est égale ou supérieure à 10 mm.

12. Pneumatique de véhicule conforme à la revendication 1,
dans lequel chaque film de remplissage de talon (106, 107, 205, 207, 208, 303, 305, 307, 310, 403, 405, 407, 409, 410, 412) a un profil de section transversale triangulaire qui diminue à partir de la base du talon vers le bord du film de remplissage de talon correspondant.

13. Procédé de fabrication d'un pneumatique de véhicule comprenant des étapes consistant à :
empiler de manière séquentielle du caoutchouc de revêtement interne, lier le caoutchouc et un premier, second film de remplissage de talon selon une structure torique,
positionner ou tricoter une nappe de carcasse à la partie supérieure du premier, second film de remplissage de talon (106, 107, 205, 207, 208, 303, 305, 307, 310, 403, 405, 407, 409, 410, 412) de sorte que la nappe de carcasse ait une partie enroulée autour d'un premier cordon de fil de talon (105, 108, 206, 209, 304, 308, 404, 408, 411),
positionner un premier film de remplissage de talon (106, 107, 205, 207, 208, 303, 305, 307, 310, 403, 405, 407, 409, 410, 412) sur la nappe de carcasse et enrouler le premier cordon de fil de talon (105, 108, 206, 209, 304, 308, 404, 408, 411) au moins trois fois,
positionner un second premier film de remplissage de talon (106, 107, 205, 207, 208, 303, 305, 307, 310, 403, 405, 407, 409, 410, 412) sur le côté axialement externe du premier cordon de fil de talon enroulé (105, 108, 206, 209, 304, 308, 404, 408, 411), et enrouler la nappe de carcasse autour du premier cordon de fil de talon (105, 108, 206, 209, 304, 308, 404, 408, 411) de sorte que l'extrémité enroulée de la nappe de carcasse soit placée entre des cordons de fil de talon voisins (105, 108, 206, 209, 304, 308, 404, 408, 411) ou à côté du cordon de fil de talon axialement le plus externe, et
positionner un troisième premier film de remplissage de talon (106, 107, 205, 207, 208, 303, 305, 307, 310, 403, 405, 407, 409, 410, 412) sur la nappe de carcasse enroulée, enrouler un second cordon de fil de talon (105, 108, 206, 209, 304, 308, 404, 408, 411) au moins trois fois puis positionner un second, second film de remplissage de talon (106, 107, 205, 207, 208, 303, 305, 307, 310, 403, 405, 407, 409, 410, 412), le terme "cordon de fil de talon" se référant à un agencement de cordons dans lequel des fils de talon formés par revêtement de fils métalliques avec du caoutchouc sont disposés sous la forme d'un corps empilé et sont installés le long de la direction périphérique d'un pneumatique, le terme "cordon" se référant à un filament unique ou à un ensemble tel qu'un filament multiple, des câbles déformés par torsion ou un ensemble équivalent, et le terme de "film de remplissage de talon" se référant à du caoutchouc de remplissage de talon mis en forme selon une feuille.

14. Procédé conforme à la revendication 13, selon lequel le premier film de remplissage de talon (106, 107, 205, 207, 208, 303, 305, 307, 310, 403, 405, 407, 409, 410, 412) comporte au moins trois premiers films de remplissage de talon (106, 107, 205, 207, 208, 303, 305, 307, 310, 403, 405, 407, 409, 410, 412).

15. Procédé conforme à la revendication 13, selon lequel le second film de remplissage de talon (106, 107, 205, 207, 208, 303, 305, 307, 310, 403, 405, 407, 409, 410, 412) comporte au moins deux seconds films de remplissage de talon (106, 107, 205, 207, 208, 303, 305, 307, 310, 403, 405, 407, 409, 410, 412).
